(19) Europäisches Patentamt
European Patent Office
Office européen des brevets

(11) Veröffentlichungsnummer: **0 084 150**
**B1**

(12) **EUROPÄISCHE PATENTSCHRIFT**

(45) Veröffentlichungstag der Patentschrift: **10.04.85**

(51) Int. Cl.⁴: **C 09 B 29/42** // C09B29/039, D06P1/18, D06P3/60

(21) Anmeldenummer: **82111821.3**

(22) Anmeldetag: **20.12.82**

(54) **Benzisothiazolazofarbstoffe.**

(30) Priorität: **16.01.82 DE 3201268**

(43) Veröffentlichungstag der Anmeldung: **27.07.83 Patentblatt 83/30**

(45) Bekanntmachung des Hinweises auf die Patenterteilung: **10.04.85 Patentblatt 85/15**

(84) Benannte Vertragsstaaten: **CH DE FR GB IT LI**

(56) Entgegenhaltungen:
**DE - A - 2 062 717**
**DE - A - 2 222 873**
**FR - A - 2 187 857**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen (DE)**

(72) Erfinder: **Dehnert, Johannes, Dr., Ottweilerstrasse 2, D-6700 Ludwigshafen (DE)**
Erfinder: **Lamm, Gunther, Dr., Heinrich-Heine-Strasse 7, D-6733 Hassloch (DE)**

**EP 0 084 150 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Verbindungen der allgemeinen Formel I:

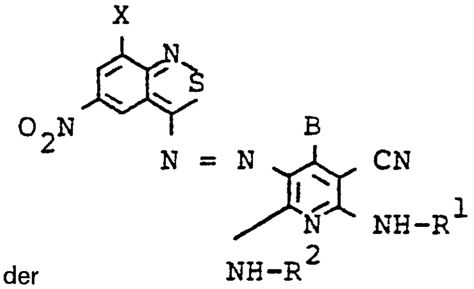

(I)

in der

X Wasserstoff, Chlor oder Brom,

B Wasserstoff, Methyl, Ethyl oder Propyl, einer der Reste,

$R^1$ und $R^2$ gegebenenfalls durch Chlor, Methyl, Ethyl, t-Butyl, Phenoxy, Methoxy, Ethoxy, Propoxy oder Butoxy ein- oder mehrfach substituiertes Phenyl und der andere der Reste,

$R^1$ und $R^2$ gegebenenfalls durch $C_1$- bis $C_8$-Alkoxy oder Phenyl substituiertes $C_2$- bis $C_8$-Alkyl, Allyl, Cyclopentyl, Cyclohexyl, Methylcyclohexyl, $CH_2-$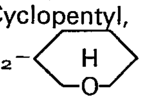,

$CH_2CH_2-$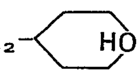 oder 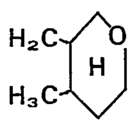 sind.

Einzelne Alkylreste $R^1$ und $R^2$ sind beispielsweise $C_2H_5$, $n-C_3H_7$, $i-C_3H_7$, n- oder $i-C_4H_9$, n- oder $i-C_5H_{11}$, n- oder $i-C_6H_{13}$, n- oder $i-C_7H_{15}$, n- oder $i-C_8H_{17}$, $C_2H_4OCH_3$, $C_2H_4OC_2H_5$, $C_2H_4OC_3H_7$, $C_2H_4OC_4H_9$, $(CH_2)_3OCH_3$, $C_2H_4OCH(CH_3)_2$, $(CH_2)_3OC_2H_5$, $(CH_2)_3OC_3H_7$, $(CH_2)_3OC_4H_9$, $(CH_2)_3OC_6H_{13}$, $(CH_2)_3OC_8H_{17}$, $CH_2\underset{OCH_3}{CH}CH_3$, $\underset{CH_3}{CH}CH_2OCH_3$, $\underset{C_2H_5}{CH}-CH_2OCH_3$, $CH_2CH_2-$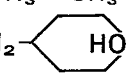,

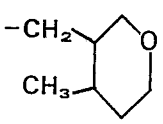, $C(CH_3)_3$, $\underset{C_2H_5}{C}(CH_3)_2$.

Zur Herstellung der Verbindung der Formel I kann man eine Diazoverbindung eines Amins der Formel

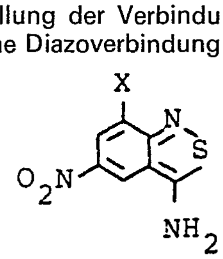

mit einer Kupplungskomponente der Formel

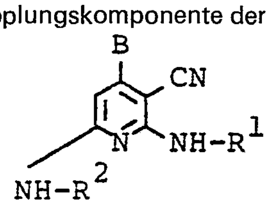

umsetzen.

Die Herstellung erfolgt analog zu bekannten Methoden.

Einzelheiten können den Beispielen entnommen werden, in denen sich Angaben über Teile und Prozente, sofern nicht anders vermerkt, auf das Gewicht beziehen.

Die Verbindungen der Formel I eignen sich vorzugsweise für das Fixierdruckverfahren (s. z.B. Nr. DE-PS 1811796), nach dem Gemische aus Cellulosefasern und Polyester Ton-in-Ton gefärbt werden können. Man erhält blaue bis schwarze Färbungen mit sehr guten Echtheiten im Vergleich zu bereits bekannten Farbstoffen. Hervorzuheben sind die Licht- und Nassechtheiten sowie die Beständigkeit gegenüber Heissdampf.

Gegenüber nächstvergleichbaren aus der FR-A Nr. 2187857 bekannten Farbstoffen handelt es sich bei den erfindungsgemässen Farbstoffen um eine spezielle Auswahl, die insbesondere beim Färben von Mischgeweben aus Cellulose und Polyestern vorteilhafte Eigenschaften zeigt. So zeichnen sich die neuen Farbstoffe beispielsweise durch eine nicht vorhersehbare Erhöhung der Lichtechtheit aus.

Von besonderer Bedeutung sind Verbindungen der Formel Ia:

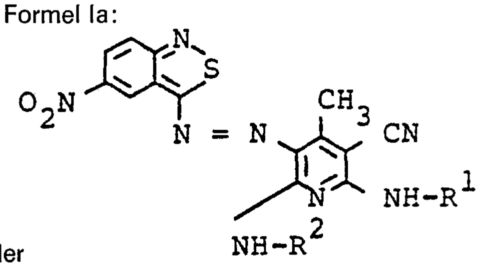

in der

$R^1$ und $R^2$ die angegebene Bedeutung haben.

$R^2$ ist dabei vorzugsweise

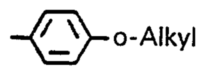 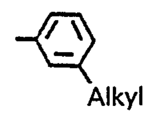 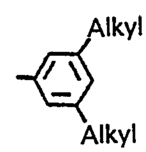

oder 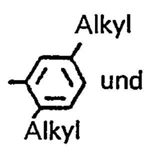 und

$R^1$ ist vorzugsweise

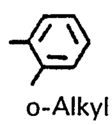 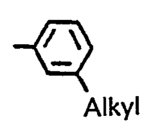 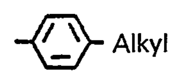

oder 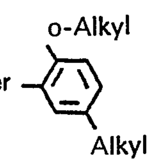

jeweils in Kombination mit einem gegebenenfalls substituierten Alkylrest gemäss der allgemeinen Definition, wobei Alkyl, Methyl, Ethyl oder t-Butyl sein kann.

Bevorzugte gegebenenfalls substituierte Alkylreste sind z.B.

$-CH(CH_3)_2$, $-CH(CH_3)CH_2OCH_3$, $-CH(C_2H_5)CH_2OCH_3$, $-CH_2CH_2OCH_3$, $(C(CH_3)_3$, $-CH_2CH_2CH_2OCH_3$, $-(CH_2)_2OC_2H_5$, $-(CH_2)_3OC_2H_5$, $-CH(CH_3)-C_2H_5$, $-(CH_2)_2OC_3H_7$, $-(CH_2)_2OC_4H_9$, $-(CH_2)_3OC_3H_7$, $-(CH_2)_3OC_4H_9$, 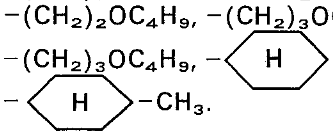 oder

Weiterhin bevorzugt ist die Kombination

$R^1 = C_6H_5$ mit $R^2 = -CH(CH_3)-CH_2OCH_3$, $-CH(C_2H_5)CH_2OCH_3$, $-CH(CH_3)_2$, $CH(CH_3)-C_2H_5$, $CH_2-CH=CH_2$ oder $C(CH_3)_3$.

*Beispiel 1*

19,6 Teile der Diazokomponente der Formel

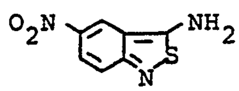

werden gemäss dem Verfahren der DE-PS Nr. 2412975 hergestellt und mit Nitrosylschwefelsäure diazotiert. Die fertige Diazoniumsalzlösung läuft dann zu einer Suspension von 31,1 Teilen der Kupplungskomponente der Formel

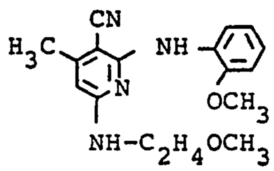

in einem Gemisch aus 400 Teilen Wasser und 900 Teilen Eis.

Das Kupplungsgemisch versetzt man mit ca. 30%iger Natriumformiatlösung, bis der pH-Wert der Suspension auf 0,3 bis 0,7 angestiegen ist, dabei hält man die Temperatur der Kupplung durch Eiszugabe unterhalb von +5° C. Nach der in ca. 30 min beendeten Kupplung wird der ausgefallene Farbstoff wie üblich isoliert, salzfrei gewaschen und getrocknet. Man erhält 49 Teile eines blauschwarzen Pulvers der Formel

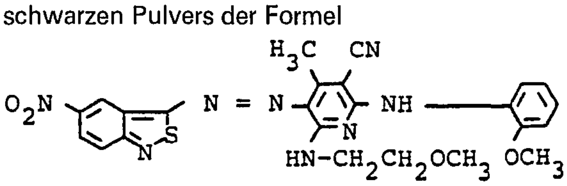

Der Farbstoff schmilzt im Temperaturbereich von 225 bis 230° C und färbt Baumwolle, Polyester und Polyester/Baumwolle-Mischgewebe in lichtechten, rotstichig blauen bis marineblauen Nuancen.

Verwendet man anstelle der oben genannten Kupplungskomponente ein Kupplungskomponentengemisch, das entsteht, wenn man 2,6-Dichlor-3-cyan-4-methylpyridin analog zu der in der DE-PS Nr. 2260827 beschriebenen Weise zuerst mit 2-Methoxyäthylamin und danach mit 2-Methoxyanilin umsetzt, so erhält man die entsprechende Menge eines Farbstoffgemisches. Es enthält neben oben genanntem Farbstoff eine geringere Menge des Farbstoffs der Formel

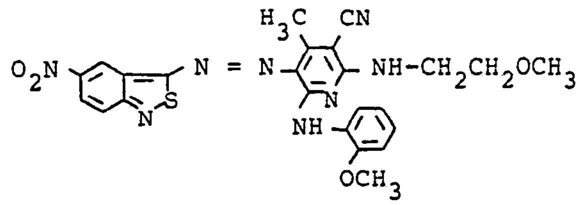

Das Gemisch schmilzt im Temperaturbereich von 185 bis 229° C.

Das Absorptionsmaximum einer Lösung in Dimethylformamid (ca. 10 mg/l) beträgt 589,5 nm.

Das Farbstoffgemisch färbt oder bedruckt Baumwolle, Polyester und Polyester/Baumwolle-Mischgewebe bei etwas niedrigeren Temperaturen in hoch lichtechten klaren blauen bis marineblauen Tönen. Die Färbungen oder Drucke sind auch in tiefen Tönen gut nassecht, ausserdem sind sie beständig gegenüber Heissdampf.

Als Färbemethode kommt zum Beispiel die in der europäischen Patentschrift Nr. 0012935 beschriebene Arbeitsweise in Betracht. Für den Druck ist beispielsweise die Methode der DE-PS Nr. 1811796 geeignet.

*Beispiel 2*

27,5 Teile der Diazokomponente der Formel

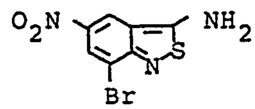

werden bei 10 bis 15° C in 200 Teilen Schwefelsäure (96-98%ig) verrührt. Danach kühlt man auf 0 bis 10° C ab und tropft bei dieser Temperatur ein Gemisch aus 100 Raumteilen Eisessig und 17 Teilen Propionsäure hinzu. Anschliessend werden bei 0 bis 4° C innerhalb von 20 bis 30 min unter Kühlung 33 Teile einer 42-44%igen Nitrosylschwefelsäurelösung zugetropft. Die Diazotierung rührt 3½ bis 4 h bei 0 bis 4° C nach und läuft dann unter Rühren zu einer Suspension von 31,1 Teilen des in Beispiel 1 beschriebenen Kupplungskomponentengemisches aus den Komponenten der Formeln

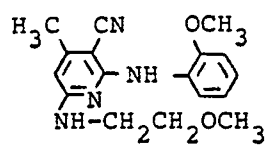

und

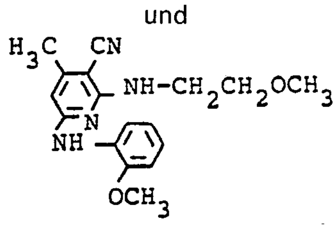

in einem Gemisch aus 400 Teilen Wasser und 900 Teilen Eis.

Nach Zulauf der Diazoniumsalzlösung hebt man den pH-Wert der Kupplung mit Natriumformiatlösung (ca. 30%ig) auf 0,5 bis 1,0 an, wobei man die Temperatur des Kupplungsgemisches durch Zugabe von Eis bei −3 bis +5° C hält.

Die fertige Kupplung wird mit Dampf auf 85° C aufgeheizt, 15 bis 30 min bei 85 bis 95° C getempert und der ausgefallene Farbstoff wie üblich salzfrei gewaschen. Nach Trocknen erhält man 57 Teile eines schwarzen Pulvers der Formeln

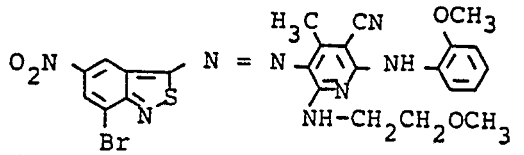

und

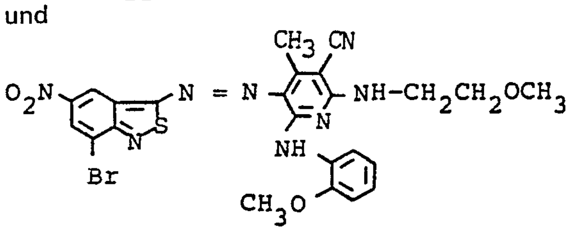

Das Mischungsverhältnis der Farbstoffe ist dasselbe wie das der eingesetzten Kupplungskomponenten.

Das Farbstoffgemisch löst sich in Dimethylformamid mit blauer Farbe und färbt oder bedruckt Baumwolle, Polyester oder Polyester/Baumwolle-Mischgewebe in blauen bis marineblauen Tönen. Die erhaltenen Färbungen oder Drucke sind gut licht- und nassecht.

*Beispiel 3*

19,6 Teile der Diazokomponente der Formel

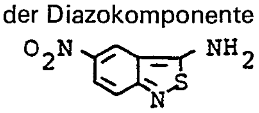

werden gemäss dem Verfahren der DE-PS Nr. 2412975 hergestellt und diazotiert. Die fertige Diazoniumsalzlösung läuft dann zu einer Suspension von einem Gemisch aus 20,6 Teilen der Kupplungskomponente der Formel

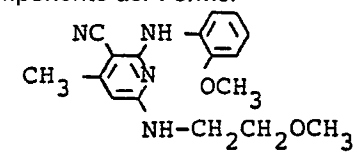

sowie 9,8 Teilen der Kupplungskomponente der Formel

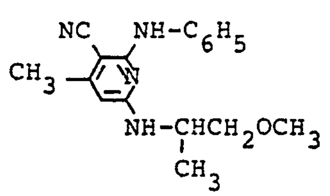

(die synthesebedingt einen geringeren Anteil der jeweils 2,6-isomeren Kupplungskomponente enthalten), in einem Gemisch aus 400 Teilen Wasser und 900 Teilen Eis. Die Herstellung der einzelnen Kupplungskomponenten erfolgt analog zu der in der DE-PS Nr. 2260827 beschriebenen Weise aus 2,6-Dichlor-3-cyan-4-methylpyridin, indem man den Heterocyclus zuerst mit dem aliphatischen Amin und in einem zweiten Reaktionsschritt mit dem aromatischen Amin umsetzt.

Die Kupplung wird analog zu der in Beispiel 1 beschriebenen Arbeitsweise beendet und der Farbstoff wie üblich aufgearbeitet. Man isoliert 47,5 Teile Farbstoffpulver. Man erhält eine Farbstoffmischung mit Einzelkomponenten der Formeln:

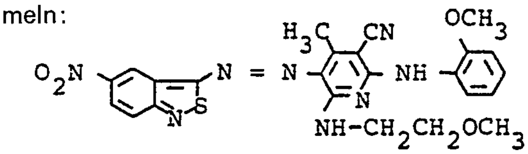

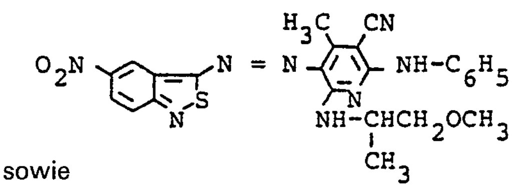

sowie

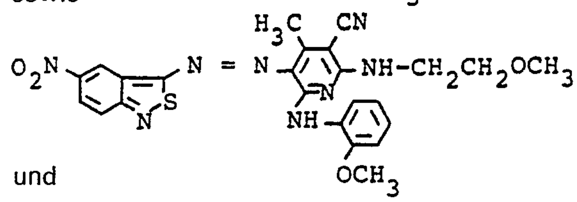

und

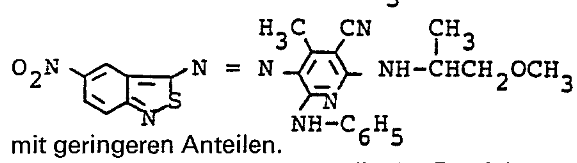

mit geringeren Anteilen.

Das Farbstoffgemisch schmilzt im Bereich von 185 bis 198° C, sein Pulver ist blauschwarz gefärbt und löst sich in Dimethylformamid mit blauer Farbe.

Schwache Färbungen oder Drucke von Polyester, Baumwolle oder Polyester/Baumwolle-Mischgeweben sind rotstichig blau, tiefere Ausfärbungen erscheinen in einem klaren Marineblau.

Die Farbstoffmischung färbt Polyester sowie Baumwolle mit guter Farbtonübereinstimmung an. Die Ausfärbungen haben gute Gebrauchsechtheiten.

Analog zu der in den Beispielen beschriebenen Arbeitsweise können die in den Tabellen ausgeführten Farbstoffe hergestellt werden. Sind bei den Angaben über den Farbton von Färbungen oder Drucken zwei Nuancen angegeben, so bezieht sich die erste Angabe auf eine hellere Ausfärbung (bzw. Druck) von ca. 0,2 bis 0,4% und die zweite Angabe auf eine Ausfärbung (bzw. Druck) von mehr als 0,8% Farbstoff.

*(Tabellen am Ende des Patents)*

## Patentansprüche

1. Benzisothiazolazofarbstoffe der allgemeinen Formel (I):

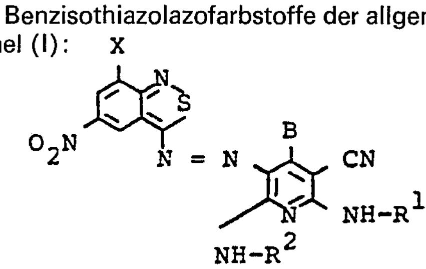

(I)

in der

X Wasserstoff, Chlor oder Brom,

B Wasserstoff, Methyl, Ethyl oder Propyl,

einer der Reste,

$R^1$ und $R^2$ gegebenenfalls durch Chlor, Methyl, Ethyl, t-Butyl, Phenoxy, Methoxy, Ethoxy, Propoxy oder Butoxy ein- oder mehrfach substituiertes Phenyl und der andere der Reste,

$R^1$ und $R^2$ gegebenenfalls durch $C_1$- bis $C_8$-Alkoxy oder Phenyl substituiertes $C_2$- bis $C_8$-Alkyl, Allyl, Cyclopentyl, Cyclohexyl, Methylcyclohexyl, $CH_2$-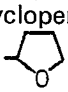,

$CH_2CH_2$-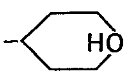 oder 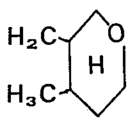 sind.

2. Farbstoffe gemäss Anspruch 1 der Formel

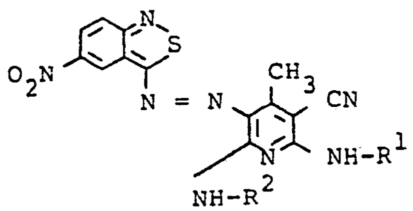

in der

$R^1$ und $R^2$ die angegebene Bedeutung haben.

3. Farbstoffe gemäss Anspruch 2, wobei einer der Reste

$R^1$ und $R^2$ gegebenenfalls durch Methyl oder Methoxy substituiertes Phenyl und der andere der Reste,

$R^1$ und $R^2$ Ethyl, Propyl, Methoxyethyl, Ethoxyethyl, Methoxypropyl, Ethoxypropyl,

$-CH-CH_2OCH_3$ oder $-CH-CH_2OCH_3$ sind.
$\quad|\qquad\qquad\qquad\qquad\quad|$
$\quad CH_3\qquad\qquad\qquad\quad C_2H_5$

4. Farbstoffe gemäss Anspruch 2, wobei einer der Reste

$R^1$ und $R^2$ Phenyl, o- oder p-Anisyl oder m- oder p-Tolyl und der andere der Reste,

$R^1$ und $R^2$ Ethyl, Propyl, Methoxyethyl, Ethoxyethyl, Methoxypropyl, Ethoxypropyl,

$-CH-CH_2OCH_3$ oder $-CH-CH_2OCH_3$ sind.
$\quad|\qquad\qquad\qquad\qquad\quad|$
$\quad CH_3\qquad\qquad\qquad\quad C_2H_5$

5. Farbstoffe gemäss Anspruch 2, wobei einer der Reste

$R^1$ und $R^2$ Phenyl, o- oder p-Anisyl oder m- oder p-Tolyl und der andere der Reste,

$R^1$ und $R^2$ Ethyl, Methoxyethyl,

$-CH-CH_2OCH_3$ oder $-CH-CH_2OCH_3$ sind.
$\quad|\qquad\qquad\qquad\qquad\quad|$
$\quad CH_3\qquad\qquad\qquad\quad C_2H_5$

6. Verwendung der Farbstoffe gemäss den Ansprüchen 1 und 2 zum Färben von Cellulose und cellulosehaltigen Mischgeweben.

**Revendications**

1. Colorants azoïques de la série des benzisothiazoles de formule (I):

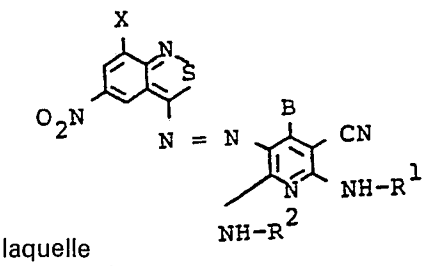 (I)

dans laquelle

X est un hydrogène, un chlore ou un brome,

B est un hydrogène, un méthyle, un éthyle ou un propyle,

l'un des radicaux $R^1$ et $R^2$ est un phényle éventuellement substitué une ou plusieurs fois par un chlore, un méthyle, un éthyle, un t-butyle, un phénoxy, un méthoxy, un éthoxy, un propoxy ou un butoxy, et

l'autre des radicaux $R^1$ et $R^2$ est un alcoyle en $C_2$-$C_8$ éventuellement substitué par un alcoxy en $C_1$-$C_8$ ou par un phényle, un allyle, un cyclopentyle, un cyclohexyle, un méthylcyclohexyle,

$CH_2$-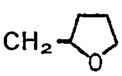, $CH_2CH_2$-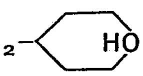 ou 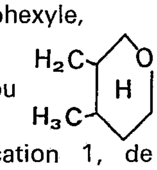

2. Colorants selon la revendication 1, de formule

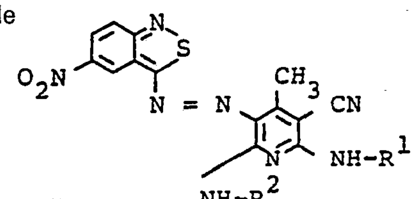

dans laquelle

$R^1$ et $R^2$ ont les significations déjà données.

3. Colorants selon la revendication 2, dans lesquels

l'un des radicaux $R^1$ et $R^2$ est un phényle éventuellement substitué par un méthyle ou un méthoxy, et

l'autre des radicaux $R^1$ et $R^2$ est un éthyle, un propyle, un méthoxyéthyle, un éthoxyéthyle, un méthoxypropyle, un éthoxypropyle,

$-CH-CH_2OCH_3$ ou $-CH-CH_2OCH_3$
$\quad|\qquad\qquad\qquad\qquad|$
$\quad CH_3\qquad\qquad\qquad C_2H_5$

4. Colorants selon la revendication 2, dans lesquels

l'un des radicaux $R^1$ et $R^2$ est un phényle, un o- ou p-anisyle ou un m- ou p-tolyle, et

l'autre des radicaux $R^1$ et $R^2$ est un éthyle, un propyle, un méthoxyéthyle, un éthoxyéthyle, un méthoxypropyle, un éthoxypropyle,

$-CH-CH_2OCH_3$ ou $-CH-CH_2OCH_3$
$\quad|\qquad\qquad\qquad\qquad|$
$\quad CH_3\qquad\qquad\qquad C_2H_5$

5. Colorants selon la revendication 2, dans lesquels

l'un des radicaux $R^1$ et $R^2$ est un phényle, un o- ou p-anisyle ou un m- ou p-tolyle, et

l'autre des radicaux $R^1$ et $R^2$ est un éthyle, un méthoxyéthyle, $-CH-CH_2OCH_3$ ou
$\qquad\qquad\qquad\qquad\qquad|$
$\qquad\qquad\qquad\qquad\quad CH_3$

$-CH-CH_2OCH_3$
$\quad|$
$\quad C_2H_5$

6. Utilisation des colorants selon les revendications 1 ou 2 pour la teinture de celluloses et de tissus mixtes contenant de la cellulose.

## Claims

1. A benzisothiazolylazo dye of the general Formula (I):

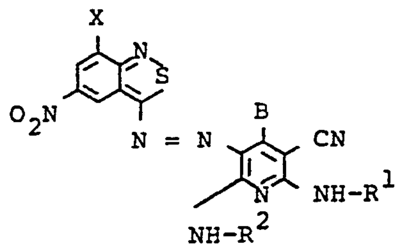

(I)

where

X is hydrogen, chlorine or bromine,

B is hydrogen, methyl, ethyl or propyl,

one of the radicals $R^1$ or $R^2$ is phenyl which is unsubstituted or mono- or polysubstituted by chlorine, methyl, ethyl, t-butyl, phenoxy, methoxy, ethoxy, propoxy or butoxy, and

the other is $C_2$-$C_8$-alkyl which is unsubstituted or substituted by $C_1$-$C_8$-alkoxy or phenyl, or is allyl, cyclopentyl, cyclohexyl, methylcyclohexyl,

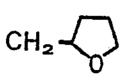 , 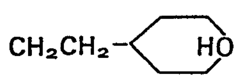 or 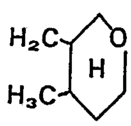

2. A dye as claimed in Claim 1, of the formula

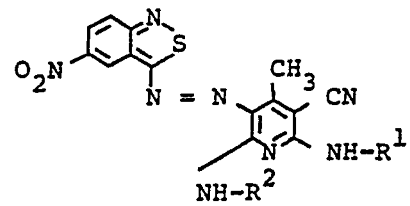

where

$R^1$ and $R^2$ have the above meanings.

3. A dye as claimed in Claim 2, where

one of the radicals $R^1$ or $R^2$ is phenyl which is unsubstituted or substituted by methyl or methoxy, and

the other is ethyl, propyl, methoxyethyl, ethoxyethyl, methoxypropyl, ethoxypropyl, $-\underset{C_2H_5}{CH}-CH_2OCH_3$ or $-\underset{CH_3}{CH}-CH_2OCH_3$

4. A dye as claimed in Claim 2, where

one of the radicals $R^1$ or $R^2$ is phenyl, o- or p-anisyl or m- or p-tolyl, and

the other is ethyl, propyl, methoxyethyl, ethoxyethyl, methoxypropyl, ethoxypropyl, $-\underset{CH_3}{CH}-CH_2OCH_3$ or $-\underset{C_2H_5}{CH}-CH_2OCH_3$

5. A dye as claimed in Claim 2, where

one of the radicals $R^1$ or $R^2$ is phenyl, o- or p-anisyl or m- or p-tolyl, and

the other is ethyl, methoxyethyl, $-\underset{CH_3}{CH}-CH_2OCH_3$ or $-\underset{C_2H_5}{CH}-CH_2OCH_3$

6. The use of a dye as claimed in Claims 1 and 2 for dyeing cellulose or cellulose-containing union fabrics.

*Tabelle 1*

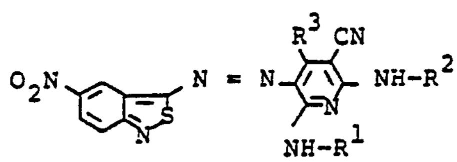

| Nr. | $R^1$ | $R^2$ | $R^3$ | Farbton |
|---|---|---|---|---|
| 4 | $-\underset{CH_3}{CH}-CH_2OCH_3$ | $C_6H_5$ | $CH_3$ | rotstichig blau marinebleau |
| 5 | $-\underset{C_2H_5}{CH}-CH-OCH_3$ | $C_6H_5$ | $CH_3$ | rotstichig blau marinebleau |
| 6 | 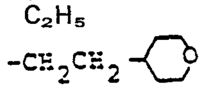 | $C_6H_5$ | $CH_3$ | rotstichig blau marinebleau |
| 7 | 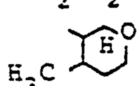 | $C_6H_5$ | $CH_3$ | rotstichig blau marinebleau |
| 8 | $C_2H_4OC_2H_5$ | $C_6H_5$ | $CH_3$ | rotstichig blau marinebleau |
| 9 | $\underset{C_6H_5}{CH}-CH_3$ | $C_6H_5$ | $CH_3$ | rotstichig blau marinebleau |
| 10 | $C_2H_4OC_3H_7(n)$ | $C_6H_5$ | $CH_3$ | rotstichig blau marinebleau |
| 11 | $C_2H_4OC_4H_9(n)$ | $C_6H_5$ | $CH_3$ | rotstichig blau marinebleau |

| Nr. | $R^1$ | $R^2$ | $R^3$ | Farbton |
|---|---|---|---|---|
| 12 | 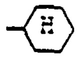 | $C_6H_5$ | $CH_3$ | rotstichig blau marinebleau |
| 13 | $C_3H_6OCH_3$ | $C_6H_5$ | $CH_3$ | rotstichig blau marinebleau |
| 14 | $C_3H_6OC_2H_5$ | $C_6H_5$ | $CH_3$ | rotstichig blau marinebleau |
| 15 | $-CHC_4H_9(n)$<br>$C_2H_5$ | $C_6H_5$ | $CH_3$ | rotstichig blau marinebleau |
| 16 | $CH_2CH-C_4H_9(n)$<br>$C_2H_5$ | $C_6H_5$ | $CH_3$ | rotstichig blau marinebleau |
| 17 | $CH-C_2H_5$<br>$CH_3$ | $C_6H_5$ | $CH_3$ | rotstichig blau marinebleau |
| 18 | $-CH-CH_2OCH_3$<br>$CH_3$ | 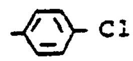 | $CH_3$ | rotstichig blau marinebleau |
| 19 | $-CH-CH_2-OCH_3$<br>$C_2H_5$ | » | $CH_3$ | rotstichig blau marinebleau |
| 20 | 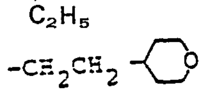 | » | $CH_3$ | rotstichig blau marinebleau |
| 21 | 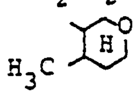 | » | $CH_3$ | rotstichig blau marinebleau |
| 22 | $C_2H_4OC_2H_5$ | » | $CH_3$ | rotstichig blau marinebleau |
| 23 | $C_2H_4OC_3H_7(n)$ | » | $CH_3$ | rotstichig blau marinebleau |
| 24 | $C_2H_4OC_4H_9(n)$ | » | $CH_3$ | rotstichig blau marinebleau |
| 25 | 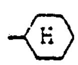 | » | $CH_3$ | rotstichig blau marinebleau |
| 26 | $C_3H_6OCH_3$ | 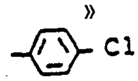 | $CH_3$ | blau marineblau |
| 27 | $C_3H_6OC_2H_5$ | » | $CH_3$ | blau marineblau |
| 28 | $CH_2CH-C_4H_9(n)$<br>$C_2H_5$ | » | $CH_3$ | blau marineblau |
| 29 | $CH-CH_2OCH_3$<br>$CH_3$ | 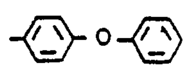 | $CH_3$ | blau marineblau |
| 30 | $C_2H_4OCH_3$ | » | $CH_3$ | blau marineblau |
| 31 | $C_3H_6OCH_3$ | » | $CH_3$ | blau marineblau |
| 32 | 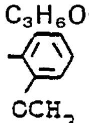 | $CH_2CH=CH_2$ | $CH_3$ | blau marineblau |
| 33 | $-CH-CH_2OCH_3$<br>$CH_3$ | 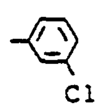 | $CH_3$ | blau marineblau |
| 34 | $-CH-CH-OCH_3$<br>$C_2H_5$ | » | $CH_3$ | blau marineblau |
| 35 | 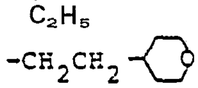 | » | $CH_3$ | blau marineblau |
| 36 | 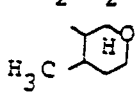 | » | $CH_3$ | blau marineblau |
| 37 | $C_2H_4OC_2H_5$ | » | $CH_3$ | blau marineblau |
| 38 | $C_2H_4OC_3H_7(n)$ | 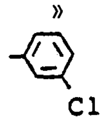 | $CH_3$ | blau marineblau |

| Nr. | R¹ | R² | R³ | Farbton |
|---|---|---|---|---|
| 39 | $C_2H_4OC_4H_9(n)$ | » | $CH_3$ | blau marineblau |
| 40 | $C_3H_6OCH_3$ | » | $CH_3$ | blau marineblau |
| 41 | $C_3H_6OC_2H_5$ | » | $CH_3$ | blau marineblau |
| 42 | $CH_2CH-C_4H_9(n)$<br>$\vert$<br>$C_2H_5$ | » | $CH_3$ | blau marineblau |
| 43 | $C_3H_6OCH_3$ | 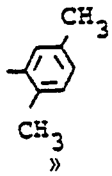 | $CH_3$ | gedecktes blau blauschwarz |
| 44 | $CHCH_2OCH_3$<br>$\vert$<br>$CH_3$ | » | $CH_3$ | gedecktes blau blauschwarz |
| 45 | 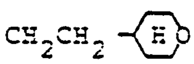 | » | $CH_3$ | gedecktes blau blauschwarz |
| 46 | $-CH-CH_2OCH_3$<br>$\vert$<br>$CH_3$ | 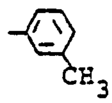 | $CH_3$ | grünstichig blau blauschwarz |
| 47 | $-CH-CH-OCH_3$<br>$\vert$<br>$C_2H_5$ | » | $CH_3$ | grünstichig blau blauschwarz |
| 48 | 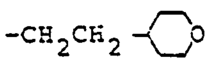 | » | $CH_3$ | grünstichig blau blauschwarz |
| 49 | 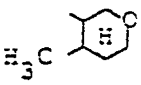 | » | $CH_3$ | grünstichig blau blauschwarz |
| 50 | $C_2H_4OC_2H_5$ | 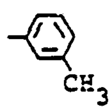 | $CH_3$ | grünstichig blau blauschwarz |
| 51 | $CH-CH_3$<br>$\vert$<br>$C_6H_5$ | » | $CH_3$ | grünstichig blau blauschwarz |
| 52 | $C_2H_4OC_3H_7(n)$ | » | $CH_3$ | grünstichig blau blauschwarz |
| 53 | $C_2H_4OC_4H_9(n)$ | » | $CH_3$ | grünstichig blau blauschwarz |
| 54 | 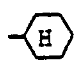 | » | $CH_3$ | grünstichig blau blauschwarz |
| 55 | $C_3H_6OCH_3$ | » | $CH_3$ | grünstichig blau blauschwarz |
| 56 | $C_3H_6OC_2H_5$ | » | $CH_3$ | grünstichig blau blauschwarz |
| 57 | $CH_2CH_2OCH_3$ | » | $CH_3$ | gedecktes blau blauschwarz |
| 58 | $C_3H_6OCH_3$ | » | H | gedecktes blau blauschwarz |
| 59 | $-CH-CH_2OCH_3$<br>$\vert$<br>$CH_3$ | 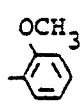 | $CH_3$ | gedecktes blau blauschwarz |
| 60 | $-CH-CH-OCH_3$<br>$\vert$<br>$C_2H_5$ | » | $CH_3$ | gedecktes blau blauschwarz |
| 61 | 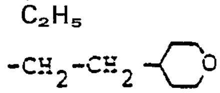 | » | $CH_3$ | gedecktes blau blauschwarz |
| 62 | 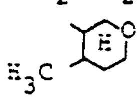 | » | $CH_3$ | gedecktes blau blauschwarz |
| 63 | $C_2H_4OC_2H_5$ | 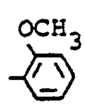 | $CH_3$ | gedecktes blau blauschwarz |
| 64 | $C_2H_4OC_3H_7(n)$ | » | $CH_3$ | gedecktes blau blauschwarz |
| 65 | $C_2H_4OC_4H_9(n)$ | » | $CH_3$ | gedecktes blau blauschwarz |
| 66 | 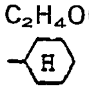 | » | $CH_3$ | gedecktes blau blauschwarz |

| Nr. | $R^1$ | $R^2$ | $R^3$ | Farbton |
|---|---|---|---|---|
| 67 | $C_3H_6OCH_3$ | » | $CH_3$ | gedecktes blau blauschwarz |
| 68 | $C_3H_6OC_2H_5$ | » | $CH_3$ | gedecktes blau blauschwarz |
| 69 | $C_2H_4OCH_3$ | » | $CH_3$ | gedecktes blau blauschwarz |
| 70 | $C_3H_6OCH_3$ | » | H | gedecktes blau blauschwarz |
| 71 | $C_3H_6OCH_3$ | » | $C_2H_5$ | gedecktes blau blauschwarz |
| 72 | $C_4H_9(n)$ | » | $CH_3$ | gedecktes blau blauschwarz |
| 73 | $C_3H_6OCH_3$ | 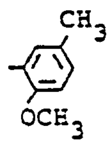 | $CH_3$ | gedecktes blau blauschwarz |
| 74 | $-CH-CH_2OCH_3$<br>\|<br>$CH_3$ | 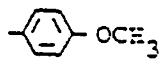 | $CH_3$ | blaugrau anthrazit |
| 75 | $-CH-CH_2-OCH_3$<br>\|<br>$C_2H_5$ | » | $CH_3$ | blaugrau anthrazit |
| 76 | 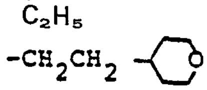 | 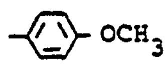 | $CH_3$ | blaugrau anthrazit |
| 77 | 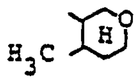 | » | $CH_3$ | blaugrau anthrazit |
| 78 | $C_2H_4OC_2H_5$ | » | $CH_3$ | blaugrau anthrazit |
| 79 | $C_2H_4OC_3H_7(n)$ | » | $CH_3$ | blaugrau anthrazit |
| 80 | $C_2H_4OC_4H_9(n)$ | » | $CH_3$ | blaugrau anthrazit |
| 81 | 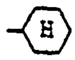 | » | $CH_3$ | blaugrau anthrazit |
| 82 | $C_3H_6OCH_3$ | » | $CH_3$ | blaugrau anthrazit |
| 83 | $C_3H_6OC_2H_5$ | » | $CH_3$ | blaugrau anthrazit |
| 84 | $-CHC_4H_9(n)$<br>\|<br>$C_2H_5$ | » | $CH_3$ | blaugrau anthrazit |
| 85 | $CH_2CH-C_4H_9(n)$<br>\|<br>$C_2H_5$ | » | $CH_3$ | blaugrau anthrazit |
| 86 | $CH-C_2H_5$<br>\|<br>$CH_3$ | » | $CH_3$ | blaugrau anthrazit |
| 87 | $C_2H_4OCH_3$ | » | $CH_3$ | blaugrau anthrazit |
| 88 | $C_3H_6OCH(CH_3)_2$ | » | $CH_3$ | blaugrau anthrazit |
| 89 | $C_3H_6OC_8H_{17}(i)$ | » | $CH_3$ | blaugrau anthrazit |
| 90 | $C_3H_6OCH_3$ | 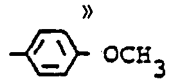 | H | blaugrau anthrazit |
| 91 | $C_3H_6OCH_3$ | » | $C_2H_5$ | blaugrau anthrazit |
| 92 | $C_3H_6OC_2H_5$ | » | H | blaugrau anthrazit |
| 93 | $-CH-CH_2OCH_3$<br>\|<br>$CH_3$ | 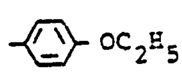 | $CH_3$ | gedecktes blau anthrazit |
| 94 | $-CH-CH-OCH_3$<br>\|<br>$C_2H_5$ | » | $CH_3$ | gedecktes blau anthrazit |
| 95 | 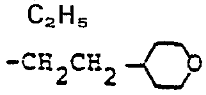 | » | $CH_3$ | gedecktes blau anthrazit |
| 96 | 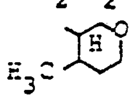 | » | $CH_3$ | gedecktes blau anthrazit |
| 97 | $C_2H_4OC_2H_5$ | » | $CH_3$ | gedecktes blau anthrazit |

| Nr. | R¹ | R² | R³ | Farbton |
|---|---|---|---|---|
| 98 | $CH-CH_3$ / $C_6H_5$ | » | $CH_3$ | gedecktes blau anthrazit |
| 99 | $C_2H_4OC_3H_7(n)$ | » | $CH_3$ | gedecktes blau anthrazit |
| 100 | $C_2H_4OC_4H_9(n)$ | » | $CH_3$ | gedecktes blau anthrazit |
| 101 | 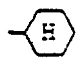 | » | $CH_3$ | gedecktes blau anthrazit |
| 102 | $C_3H_6OCH_3$ | » | $CH_3$ | gedecktes blau anthrazit |
| 103 | $C_3H_6OC_2H_5$ | 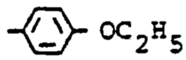 | $CH_3$ | gedecktes blau anthrazit |
| 104 | $-CHC_4H_9(n)$ / $C_2H_5$ | » | $CH_3$ | gedecktes blau anthrazit |
| 105 | $CH_2CH-C_4H_9(n)$ / $C_2H_5$ | » | $CH_3$ | gedecktes blau anthrazit |
| 106 | $CH-C_2H_5$ / $CH_3$ | » | $CH_3$ | gedecktes blau anthrazit |
| 107 | $C_2H_4OCH_3$ | » | $CH_3$ | gedecktes blau anthrazit |
| 108 | $C_3H_6OCH_3$ | 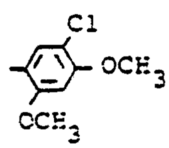 | $CH_3$ | blaugrau anthrazit |

*Tabelle 2*

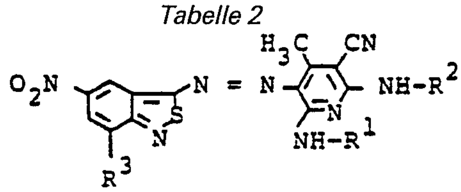

| Nr. | R¹ | R² | R³ | Farbton |
|---|---|---|---|---|
| 109 | $-CHCH_2OCH_3$ / $CH_3$ | 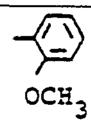 | H | blau marineblau |
| 110 | $CH-CH_2OCH_3$ / $C_2H_5$ | » | H | blau marineblau |
| 111 | $CH_2CH_2$ 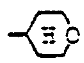 | » | H | blau marineblau |
| 112 | 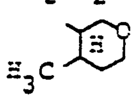 | » | H | blau marineblau |
| 113 | $C_2H_4OC_2H_5$ | » | H | blau marineblau |
| 114 | $CH-CH_3$ / $C_6H_5$ | » | H | blau marineblau |
| 115 | $CH_2CH_2-C_6H_5$ | » | H | blau marineblau |
| 116 | $CH_2CH-C_6H_5$ / $CH_3$ | » | H | blau marineblau |
| 117 | $C_2H_4OC_3H_7(n)$ | » | H | blau marineblau |

| Nr. | R[1] | R[2] | R[3] | Farbton |
|---|---|---|---|---|
| 118 | $C_2H_4OC_3H_7(i)$ | 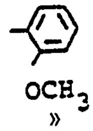 | H | blau marineblau |
| 119 | $C_2H_4OC_4H_9(n)$ | » | H | blau marineblau |
| 120 | $C_3H_6OCH_3$ | » | H | blau marineblau |
| 121 | $C_3H_6OC_2H_5$ | » | H | blau marineblau |
| 122 | $C_3H_6OC_3H_7(n)$ | » | H | blau marineblau |
| 123 | $C_3H_6OC_8H_{17}(i)$ | » | H | blau marineblau |
| 124 | $CH_2CHC_4H_9(n)$<br>$C_2H_5$ | » | H | blau marineblau |
| 125 | 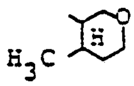 | » | Cl | blau marineblau |
| 126 | $CHCH_2OCH_3$<br>$CH_3$ | 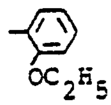 | H | blau marineblau |
| 127 | $CH-CH_2OCH_3$<br>$C_2H_5$ | » | Cl | blau |
| 128 | 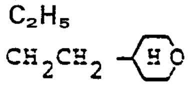 | » | Cl | blau |
| 129 | 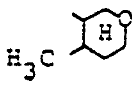 | » | Cl | blau |
| 130 | $C_2H_4OC_2H_5$ | 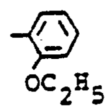 | H | blau marineblau |
| 131 | $C_2H_4OC_3H_7(n)$ | » | H | blau marineblau |
| 132 | $C_2H_4OC_2H_7(i)$ | » | H | blau marineblau |
| 133 | $C_2H_4OC_4H_9(n)$ | » | H | blau marineblau |
| 134 | $C_3H_6OCH_3$ | » | H | blau marineblau |
| 135 | $C_3H_6OC_2H_5$ | » | H | blau marineblau |
| 136 | $C_3H_6OC_3H_7(n)$ | » | H | blau marineblau |
| 137 | $C_3H_6OC_8H_{17}(i)$ | » | H | blau marineblau |
| 138 | $CHCH_2OCH_3$<br>$CH_3$ | 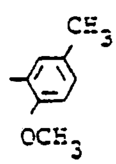 | H | marineblau blauschwarz |
| 139 | $CH-CH_2OCH_3$<br>$C_2H_5$ | » | H | marineblau blauschwarz |
| 140 | 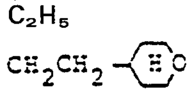 | » | H | marineblau blauschwarz |
| 141 | 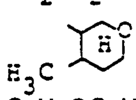 | » | H | marineblau blauschwarz |
| 142 | $C_2H_4OC_2H_5$ | » | H | marineblau blauschwarz |
| 143 | $C_2H_4OC_3H_7(n)$ | 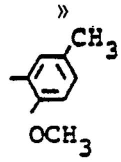 | H | marineblau blauschwarz |
| 144 | $C_2H_4OC_3H_7(i)$ | » | H | marineblau blauschwarz |
| 145 | $C_2H_4OC_4H_9(n)$ | » | H | marineblau blauschwarz |
| 146 | $C_3H_6OCH_3$ | » | H | marineblau blauschwarz |

| Nr. | $R^1$ | $R^2$ | $R^3$ | Farbton |
|---|---|---|---|---|
| 147 | $C_3H_6OC_2H_5$ | » | H | marineblau blauschwarz |
| 148 | $C_3H_6OC_3H_7(n)$ | » | H | marineblau blauschwarz |
| 149 | $CH(CH_3)_2$ | » | H | blau marineblau |
| 150 | $CHCH_2OCH_3$ (mit $CH_3$) | 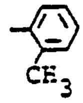 | H | blau marineblau |
| 151 | $CH-CH_2OCH_3$ (mit $C_2H_5$) | » | H | blau marineblau |
| 152 | 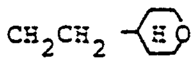 | » | H | blau marineblau |
| 153 | 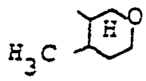 | » | H | blau marineblau |
| 154 | $C_2H_4OC_2H_5$ | » | H | blau marineblau |
| 155 | $C_2H_4OC_3H_7(n)$ | » | H | blau marineblau |
| 156 | $C_2H_4OC_3H_7(i)$ | 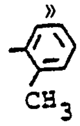 | H | blau marineblau |
| 157 | $C_2H_4OC_4H_9(n)$ | » | H | blau marineblau |
| 158 | $C_3H_6OCH_3$ | » | H | blau marineblau |
| 159 | $C_3H_6OC_2H_5$ | » | H | blau marineblau |
| 160 | $C_3H_6OC_3H_7(n)$ | » | H | blau marineblau |
| 161 | $C_3H_6OC_8H_{17}(i)$ | » | H | blau marineblau |
| 162 | 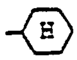 | 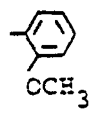 | H | marineblau |
| 163 | 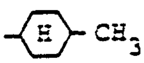 | » | H | marineblau |
| 164 | $CHCH_2OCH_3$ (mit $CH_3$) | 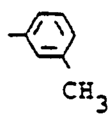 | H | grünstichiges blau marineblau |
| 165 | $CH-CH_2OCH_3$ (mit $C_2H_5$) | » | H | grünstichiges blau marineblau |
| 166 | 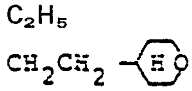 | » | H | grünstichiges blau marineblau |
| 167 | 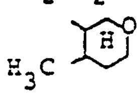 | » | H | grünstichiges blau marineblau |
| 168 | $C_2H_4OC_2H_5$ | » | H | grünstichiges blau marineblau |
| 169 | $CH-CH_3$ (mit $C_6H_5$) | 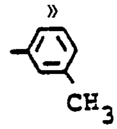 | H | grünstichiges blau marineblau |
| 170 | $CH_2CH_2-C_6H_5$ | » | H | grünstichiges blau marineblau |
| 171 | $CH_2CH-C_6H_5$ (mit $CH_3$) | » | H | grünstichiges blau marineblau |
| 172 | $C_2H_4OC_3H_7(n)$ | » | H | grünstichiges blau marineblau |
| 173 | $C_2H_4OC_3H_7(i)$ | » | H | grünstichiges blau marineblau |
| 174 | $C_2H_4OC_4H_9(n)$ | » | H | grünstichiges blau marineblau |
| 175 | $C_3H_6OCH_3$ | » | H | grünstichiges blau marineblau |
| 176 | $C_3H_6OC_2H_5$ | » | H | grünstichiges blau marineblau |
| 177 | $C_3H_6OC_3H_7(n)$ | » | H | grünstichiges blau marineblau |

| Nr. | $R^1$ | $R^2$ | $R^3$ | Farbton |
|---|---|---|---|---|
| 178 | $C_3H_6OC_8H_{17}(i)$ | » | H | grünstichiges blau marineblau |
| 179 | $CH_2CHC_4H_9(n)$<br>$\quad\vert$<br>$\quad C_2H_5$ | » | H | grünstichiges blau marineblau |
| 180 | $C_2H_4OCH_3$ | » | H | grünstichiges blau marineblau |
| 181 | $CHCH_2OCH_3$<br>$\vert$<br>$CH_3$ | 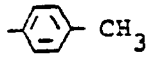 | H | blau marineblau |
| 182 | $CH-CH_2OCH_3$<br>$\vert$<br>$C_2H_5$ | » | H | blau marineblau |
| 183 | 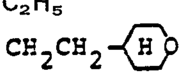 | 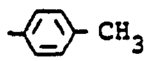 | H | blau marineblau |
| 184 | 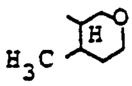 | » | H | blau marineblau |
| 185 | $C_2H_4OC_2H_5$ | » | H | blau marineblau |
| 186 | $CH_2CH_2-C_6H_5$ | » | H | blau marineblau |
| 187 | $CH_2CH-C_6H_5$<br>$\quad\vert$<br>$\quad CH_3$ | » | H | blau marineblau |
| 188 | $C_2H_4OC_3H_7(n)$ | » | H | blau marineblau |
| 189 | $C_2H_4OC_3H_7(i)$ | » | H | blau marineblau |
| 190 | $C_2H_4OC_4H_9(n)$ | » | H | blau marineblau |
| 191 | $C_3H_6OCH_3$ | » | H | blau marineblau |
| 192 | $C_3H_6OC_2H_5$ | » | H | blau marineblau |
| 193 | $C_3H_6OC_3H_7(n)$ | » | H | blau marineblau |
| 194 | $C_3H_6OC_8H_{17}(i)$ | » | H | blau marineblau |
| 195 | $CH_2CHC_4H_9(n)$<br>$\quad\vert$<br>$\quad C_2H_5$ | » | H | blau marineblau |
| 196 | $C_2H_4OCH_3$ | » | H | blau marineblau |
| 197 | 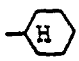 | 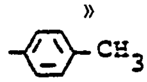 | H | blau marineblau |
| 198 | $CHCH_2OCH_3$<br>$\vert$<br>$CH_3$ | 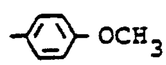 | H | blau marineblau |
| 199 | $CH-CH_2OCH_3$<br>$\vert$<br>$C_2H_5$ | » | H | blau marineblau |
| 200 | 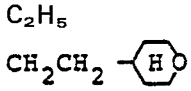 | » | H | blau marineblau |
| 201 | 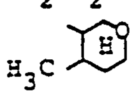 | » | H | blau marineblau |
| 202 | $C_2H_4OC_2H_5$ | » | H | blau marineblau |
| 203 | $C_2H_4OC_3H_7(n)$ | » | H | blau marineblau |
| 204 | $C_2H_4OC_3H_7(i)$ | » | H | blau marineblau |
| 205 | $C_2H_4OC_4H_9(n)$ | » | H | blau marineblau |
| 206 | $C_3H_6OCH_3$ | » | H | blau marineblau |
| 207 | $C_3H_6OC_2H_5$ | » | H | blau marineblau |
| 208 | $C_3H_6OC_3H_7(n)$ | » | H | blau marineblau |
| 209 | $C_3H_6OC_8H_{17}(i)$ | » | H | blau marineblau |
| 210 | 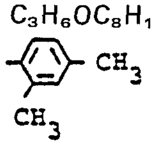 | $CH-CH_2OCH_3$<br>$\vert$<br>$CH_3$ | H | marineblau |

| Nr. | $R^1$ | $R^2$ | $R^3$ | Farbton |
|---|---|---|---|---|
| 211 | » | $C_3H_6OCH_3$ | H | marineblau |
| 212 | $\underset{CH_3}{\underset{\vert}{C}}HCH_2OCH_3$ | 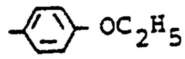 | H | blau marineblau |
| 213 | $\underset{C_2H_5}{\underset{\vert}{C}}H-CH_2OCH_3$ | » | H | blau marineblau |
| 214 | 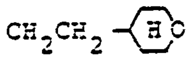 | » | H | blau marineblau |
| 215 | 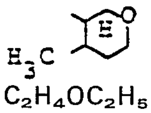 | » | H | blau marineblau |
| 216 | $C_2H_4OC_2H_5$ | » | H | blau marineblau |
| 217 | $C_2H_4OC_3H_7(n)$ | » | H | blau marineblau |
| 218 | $C_2H_4OC_3H_7(i)$ | » | H | blau marineblau |
| 219 | $C_2H_4OC_4H_9(n)$ | » | H | blau marineblau |
| 220 | $C_3H_6OCH_3$ | » | H | blau marineblau |
| 221 | $C_3H_6OC_2H_5$ | » | H | blau marineblau |
| 222 | $C_3H_6OC_3H_7(n)$ | » | H | blau marineblau |
| 223 | $C(CH_3)_3$ | 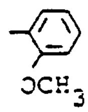 | H | blau marineblau |
| 224 | $C_6H_5$ | $\overset{CH_3}{\overset{\vert}{C}}H-CH_2OCH_3$ | H | blau marineblau |
| 225 | $C_4H_9(n)$ | 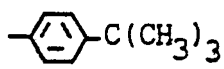 | H | blau marineblau |
| 226 | 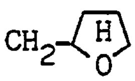 | $C_6H_5$ | H | blau marineblau |